# EUROPEAN PATENT SPECIFICATION

(11) **EP 1 524 716 B1**
(45) Date of publication and mention of the grant of the patent: **21.01.2009**
(21) Application number: 04024111.9
(22) Date of filing: 08.10.2004
(51) Int. Cl.: H01M 8/10, H01M 8/04

(54) **Manufacturing process of layer lamination integrated fuel cell system and the fuel cell system itself**
Verfahren zur Herstellung eines Laminationsschicht-integrierten Brennstoffzellensystem und Brennstoffzellensystem
Procédé de fabrication d'une couche laminée intégrée au système de pile à combustible et système de pile à combustible

(30) Priority: 14.10.2003 CN 200310100336
(43) Date of publication of application: 20.04.2005
(73) Proprietor: Antig Technology Co., Ltd., Taipei (TW)
(72) Inventor: Shu, Hsi-Ming, Taipei (TW); Deng, Feng-Yi, Taipei (TW)
(74) Representative: Zeitler - Volpert - Kandlbinder

(56) References cited:
- US-A- 6 127 058
- US-A1- 2002 098 402
- US-A1- 2003 013 000
- US-A1- 2003 138 685
- US-A1- 2005 066 520

## Description

The present invention is related to a manufacturing process of fuel cell system and to fuel cell systems manufactured using this process. Particularly, the present invention is related to the manufacturing process of "layer lamination integrated fuel cell system" and the fuel-cell system produced using this manufacturing process.

### BACKGROUND OF THE INVENTION

The traditional design for fuel cell system is the stack design. Stack design was previously disclosed in USP5,200,278, USP5,252,410, USP5,360,679 and USP6,030,718. Although fuel cell systems produced using the traditional stack design typically have higher power efficiency, stack design is structurally complex, making it more costly and difficult to produce. Its complex components also require precise coordination with system peripheral components.

Another common design of fuel cell is the planar design. Planar design was previously disclosed in USP5,631,099, USP5,759,712, USP6,127,058, USP6,387,559, USP6,497,975 and USP6,465,119. Planar design allows fuel cell system to fit into tiny, thin spaces, making it suitable for small electronic appliance such as mobile phone, PDA, and notebook computer. Planar design is easier to produce than stack design, and does not require as much precision in coordination with the system's peripheral components. However, planar design has lower power efficiency.

U.S. Patent USP5,631,099, entitled "Surface Replica Fuel Cell", disclosed both stack and planar design. USP5,631,099 combines elements of both stack and planar design to offer advantages such as increased power efficiency, light-weight, and space-saving. However, USP5,631,099 still has several drawbacks such as complex structure, difficult to produce, difficult to discharge reactive products (such as water), and difficult to supply air or oxygen.

### SUMMARY OF THE INVENTION

The crux of the present invention is to provide an improved manufacturing method of fuel cell system as well as an improved fuel system made utilizing the manufacturing method disclosed here. The present invention offers advantages of both the stack design and the planar design, such as increased power efficiency. At the same time, the present invention also allows electric circuits to be implanted into the fuel cell system. The fuel cell system of the present invention further has the advantages such as easy-to-produce, cost effective, lightweight, convenient to use, less restriction on space, etc

A primary object of the present invention is to provide manufacturing process of layer lamination integrated fuel cell system such that system on cell can be implemented easily in the fuel cell system.

Another object of the present invention is to provide a layer lamination integrated fuel cell system formed as system on cell.

Accordingly, in order to achieve the preceding objects, the present invention provides a manufacturing process for layer lamination integrated fuel cell system, including the following steps: providing a membrane-electrode assembly layer, an anode current collection layer and a cathode current collection layer. Each of these layers may integrate with a first power/signal transmission layer within each own respective layer; providing one or more electromechanical control layer; coupling the membrane-electrode assembly layer, the anode current collection layer, the cathode current collection layer, and the first power/signal transmission layer together by the means of stacking lamination layers.

Next, in order to achieve the preceding objects, the present invention provides a layer lamination integrated fuel cell system, which contains a membrane-electrode assembly layer, an anode current collection layer, a cathode current collection layer and an electromechanical control layer. Its characteristics include: one or more first power/signal transmission layer, and each one of the membrane-electrode assembly layer, anode current collection layer, and cathode current collection layer may integrate with a said first power/signal transmission layer within each respective layer; and the membrane-electrode assembly layer, the anode current collection layer, the cathode current collection layer, the first power/signal transmission layer and the electromechanical control layer coupled together by means of stacking lamination layers.

### BRIEF DESCRIPTION OF THE DRAWINGS

The detail structure, the applied principle, the function, and the effectiveness of the present invention can be more clearly understood with reference to the following description and accompanying drawings. In the drawings:
Fig. 1 is a structural diagram illustrating a layer lamination integrated fuel cell system made in accordance to the manufacturing process of the present invention;
Fig. 2 is a flow chart illustrating the manufacturing process for the layer lamination integrated fuel cell system according to the present invention;
Fig. 3A is a perspective diagram illustrating the membrane-electrode assembly layer in the present invention;
Fig. 3B is a perspective diagram of the anode current collection layer in the present invention;
Fig. 3C is a perspective diagram of the cathode current collection layer in the present invention;
Fig. 4 is a perspective diagram of the electromechanical control layer in the present invention;
Fig. 5 is an exploded perspective diagram of the layer lamination integrated fuel cell system made in accordance with the manufacturing process of the present invention;
Figs. 6A to 6E are perspective diagrams illustrating different embodiments of the second power/signal transmission layer;
Fig. 7 is an exploded perspective diagram of the membrane-electrode assembly layer;
Fig. 8 is a perspective diagram of the first power/signal layer in the present invention; and
Fig. 9 is a perspective diagram illustrating different fuel cell systems stacked and integrated together.

### DETAILED DESCRIPTION OF THE INVENTION

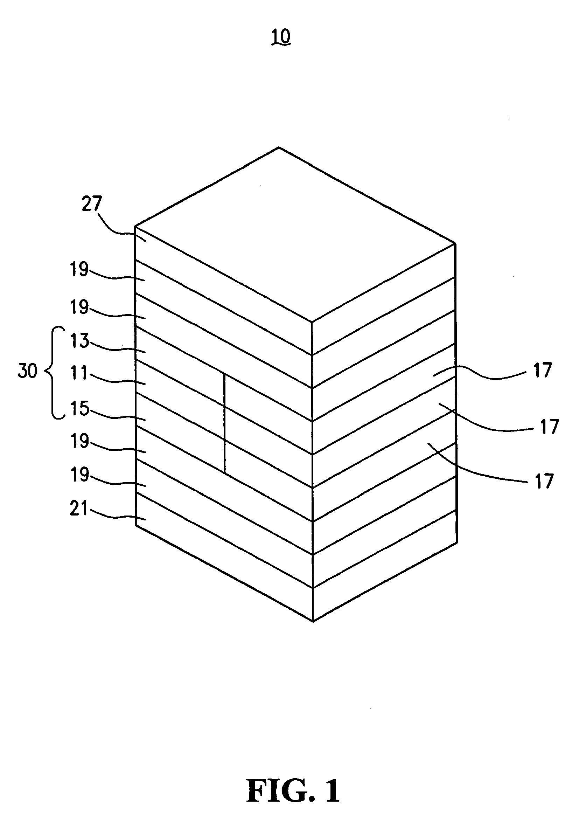

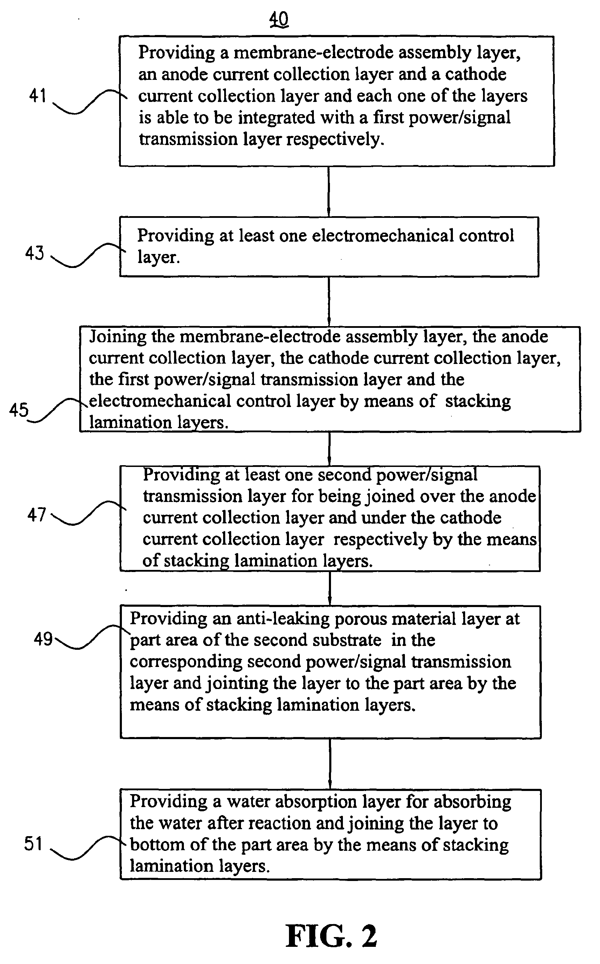

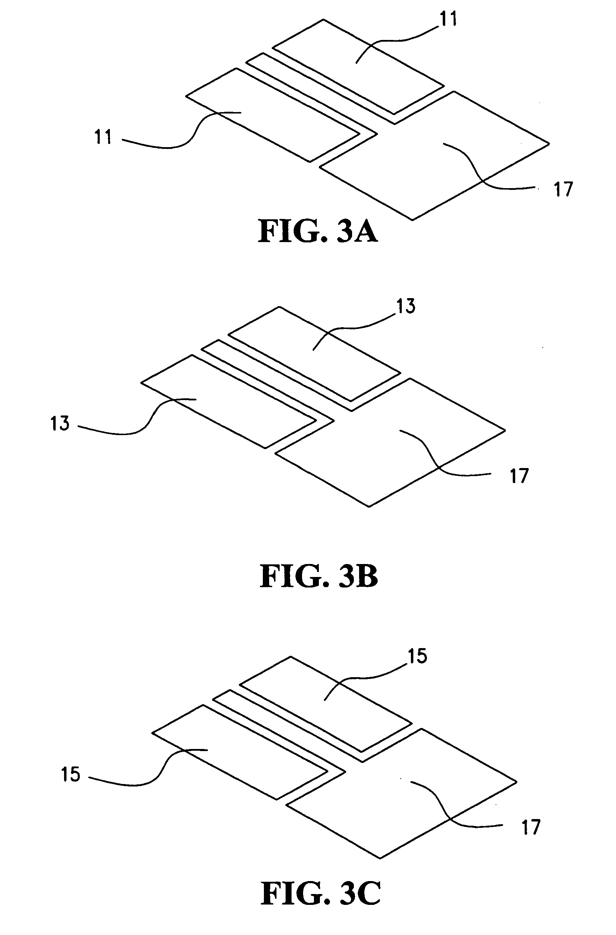

Referring to Figs. 1 and 2, the manufacturing process 40 of layer lamination integrated fuel cell system 10 primarily includes the following steps. Step 41 provides a membrane-electrode assembly layer 11, an anode current collection layer 13 and a cathode current collection layer 15. A first power/signal transmission layer 17 can be integrated with each of the membrane-electrode assembly layer 11, the anode current collection layer 13 and the cathode current collection layer 15. It can be seen in Fig. 3A a first power/signal transmission layer 17 integrated to the membrane-electrode assembly layer 11. Similarly, it can be seen in Fig. 3B a first power/signal transmission layer 17 integrated to the anode current collection layer 13, and in Fig. 3C a first power/signal transmission layer integrated to the cathode current collection layer 15.

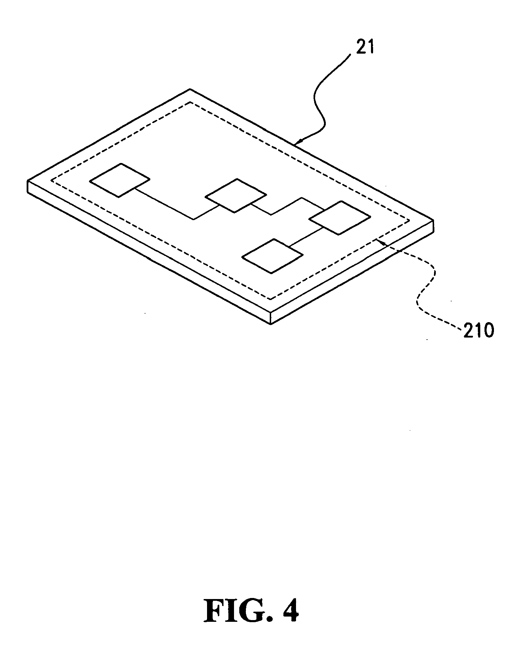

Step 43 is to provide an electromechanical control layer 21. The electromechanical control layer 21 can be mounted with electromechanical circuits 210 such as micro controller, protect circuit, DC-DC converter, and/or other active and passive component and peripheral circuit. Please refer to Fig. 4 for a perspective diagram depicting the electromechanical control layer 21 of the present invention.

Step 45 is to couple the membrane-electrode assembly layer 11, the anode current collection layer 13, the cathode current collection layer 15, the first power/signal transmission layer 17 in step 41 and the electromechanical control layer 21 in step 43 by the means of stacking lamination layers. The method of the present invention uses the means of stacking lamination layers to couple the preceding layers 11, 13, 15, 17, 21 layer by layer, similar to making a sandwich by stacking layers of toast and ham on top of one another. The way of coupling may be by pressing, accumulating, adhesion, screw thread fastening, clamping, or other means of coupling.

The method 40 of the present invention further includes step 47, which provides one or more second power/signal transmission layer 19, each separately coupled to the top of the anode current collection layer 13 and/or under the cathode current collection layer 15 by the means of stacking lamination layers, such that it forms a storage space to contain the reaction substance of anode and cathode.

When the present invention uses a liquid fuel, such as methanol solution, as the anode fuel, the method 40 further includes step 49, which provides an anti-leaking porous material layer 23, coupled to the top of some area 191 A of the second substrate 191 in the corresponding second power/signal transmission layer 19 by the means of stacking lamination layers. The layer 23 is used to separate the methanol solution and carbon oxide after the reaction.

The method 40 of the present invention further includes step 51, which provides a water absorption layer 25 for absorbing water after the reaction. The water absorption layer 25 is coupled to the bottom of some area 191 A at the second substrate 191 of the corresponding second power/signal transmission layer 19 by the means of stacking lamination layers.

It can be understood from the preceding explanation of the method 40 according to the present invention, the core component of fuel cell 30 produced with the method 40 can easily be coupled to a first power/signal transmission layer 17, second power/signal transmission layer 19, and electromechanical control layer 21. Further, substance produced during and after the core component of fuel cell 30 generates electricity can be further treated. For example, the anti-leaking porous material layer 23 and the water absorption layer 25 can be coupled together and controlled by the circuit components on the first power/signal transmission layer 17, the second power/signal transmission layer 19, and the electromechanical control layer 21. The preceding layers 17, 19, 21 may be electrically connected with each other by way such as via holes. The method 40 of the present invention allows system on cell to be easily implemented on fuel cell system.

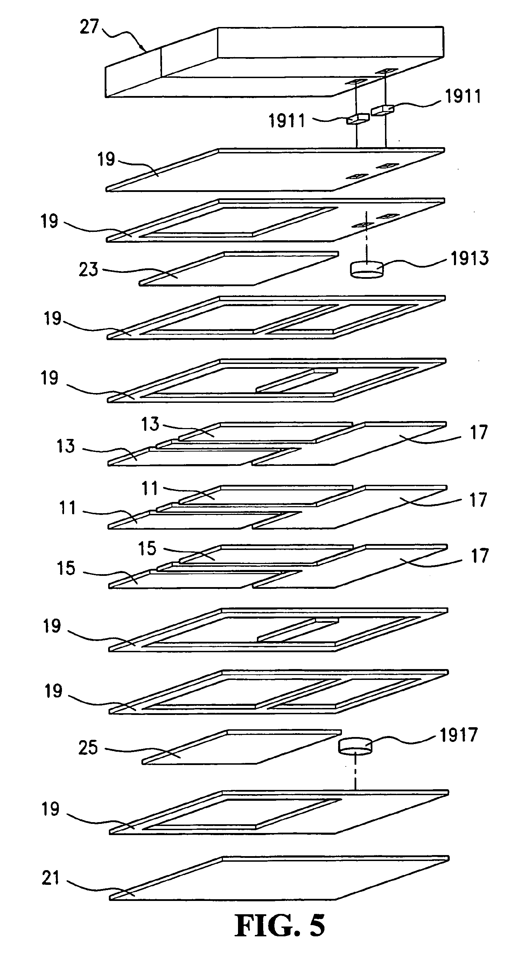

Referring to Fig. 5, the fuel cartridge 27 may be placed at the top of the fuel cell system 10. In practice, when the fuel cell system 10 of the present invention is a methanol based fuel cell system, then the fuel cartridge 27 may be used to separately store methanol and water, or to store a methanol solution of a predetermined concentration ratio, so that it refills the fuel the fuel cell system expended while generating electricity. Alternatively, when the fuel cell system 10 of the present invention is a hydrogen based fuel cell system, then the fuel cartridge 27 may be used to store hydrogen, so that it refills the hydrogen the fuel cell system expended while generating electricity.

The electromechanical control layer 21 shown in Fig. 5 is disposed at the bottommost end only for the purpose of this explanation. It should be noted that the location of electromechanical control layer 21 is not limited to the location described in Fig. 5. Any person familiar with this field can easily change the design to place the electromechanical control layer 21 at other locations, such as between any two layers in the fuel cell system 10. Such a modified design nevertheless still falls within the scope of the present invention. As disclosed above, the electromechanical circuits 210 on the electromechanical control layer 21 may consists of micro controller, protective circuit, DC-DC converter, and any other active and passive components and peripheral circuits. The important thing is that the active and passive components used in the electromechanical circuits 210, such as the micro controller, resistors, capacitor, inductor and transistor, can be formed as, for instance, a protective circuit, a DC-DC converter and etc., to constitute a primary layer for electromechanical control. Further, the positive and negative power of the fuel cell of the present invention can be led out via the electromechanical control layer 21 for the external loads. Hence, the electromechanical control layer 21 is one of the key elements to implementing the system on cell for the fuel cell system.

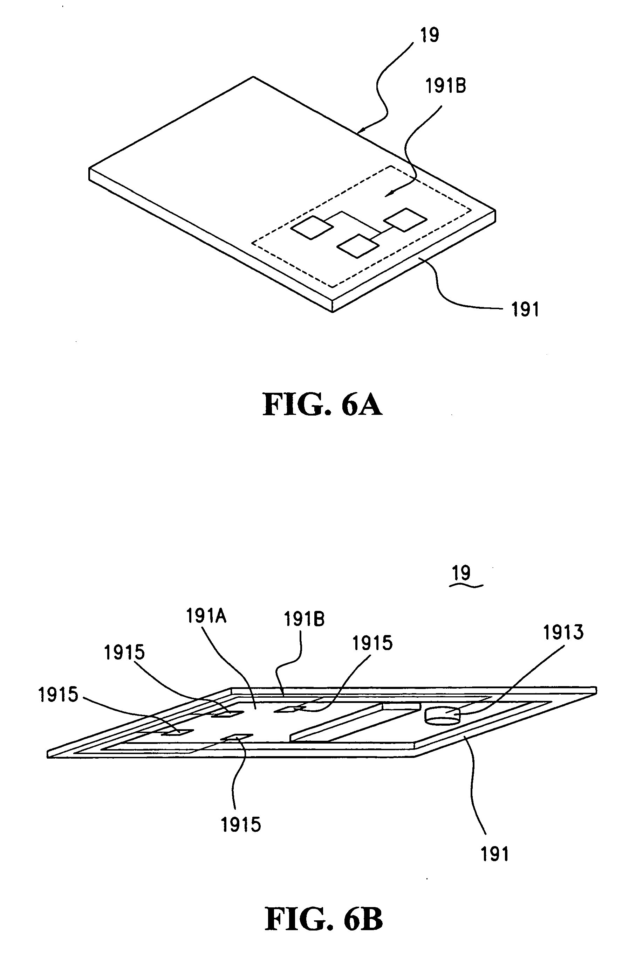

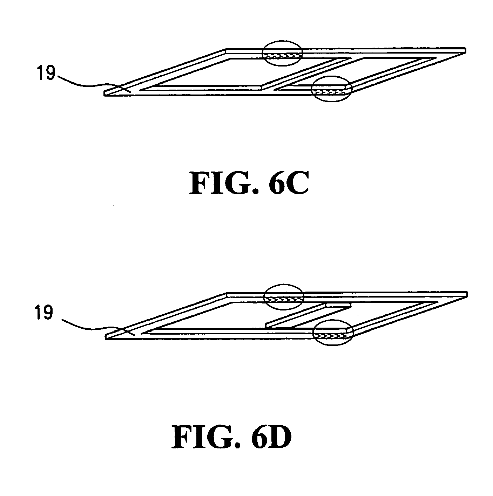

One or more second power/signal transmission layers 19 are provided in the present invention and each of the second power/signal transmission layer 19 includes a second substrate 191 and a second circuit 191B on the second substrate 191. Referring to Figs. 6A to 6E, depending on the actual design needs, one or more second power/signal transmission layers 19 can be coupled to the fuel cell system 10 by the means of stacking lamination layers. Further, the second circuit 191B can, depending on the design needs, be designed to control the electric power generation of the core component of fuel cell 30. For example, the second circuit 191B in a layer lamination integrated direct methanol fuel cell system 10 of the present invention can control the inflow of the methanol solution through the electromechanical gate component 1911, as shown in Fig. 5. The possible components used may include micro components such as pump, nozzle, electronic switch, and gate. Referring to Figs. 6B and 6C, the second circuit 191B can be used for controlling micro component 1913, such as a submerged motor, to actuate the circulation of the methyl alcohol solution in the anode action.

At the same time, the in-flowed methanol and water can be mixed into an evenly mixed methanol solution, so that the methanol solution's stability during anode action is improved. The possible components of the second circuit 191B being embodied are micro components 1913, such as pumps and submerged motors, and these components 1913 are placed between the second power/signal transmission layer 19 and the anode current collection layer 13. In addition, some area 191A of the second substrate 191 in the second power/signal transmission layer 19 can be used directly as the space to mix the methanol and the water. Further, the second circuit 191B of the second the power/signal transmission layer 19 can be embodied with one or more sensor 1915. For example, a concentration sensor can be used as the sensor 1915 to detect the concentration of the methanol solution, and a temperature sensor can be used as the sensor 1915 to detect the temperature of the reaction. Of course, two or more concentration sensors can be used for detecting concentration ratio before and after the reaction, so as to more precisely manage the timing and the volume of the inflow of the methanol solution.

Similarly, some area 191A of the second substrate 191 in the second power/signal transmission layer 19 associated with the cathode action can be used to provide the flow space for the cathode reaction substance-such as air or oxygen-during cathode action. The number of the second power/signal transmission layer 19 used can increase or decrease depending size of air or oxygen flow space needed or depending on the size of the micro components used. Further, the second circuit 191B is used to actuate the circulation of air or oxygen for the cathode action, so that the cathode reacts more efficiently. At the same time, water can be discarded by way of vaporization so that it does not impede the cathode reaction. In this case, the possible components for embodying the second circuit 191B may be micro components 1917 such as pump, motor, fan and blower.

Referring to Figs. 6C and 6D, the second power/signal transmission layer 19 associate with the cathode action has on its sidewall a plurality of air apertures 191C to allow the air to circulate and allow the evaporated moisture to exit via the air apertures 191C.

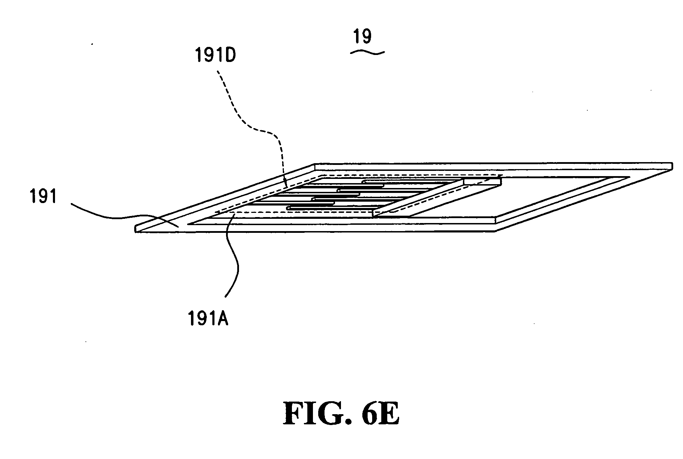

Moreover, Referring to Fig. 6E, the second power/signal transmission layer 19 associate with the anode action in the layer lamination integrated fuel cell provides some area 191A to form a flow field 191D. 191D is used to provide a flow path for the anode fuel's circulation, thereby enhances the chance of reaction for the anode fuel.

The preceding embodiment of the second power/signal transmission layer 19 illustrated in Figs. 6A to 6E discloses possible examples of the second power/signal transmission layer 19. It should be noted that the present invention is not limited to the embodiments shown in Figs. 6A to 6E.

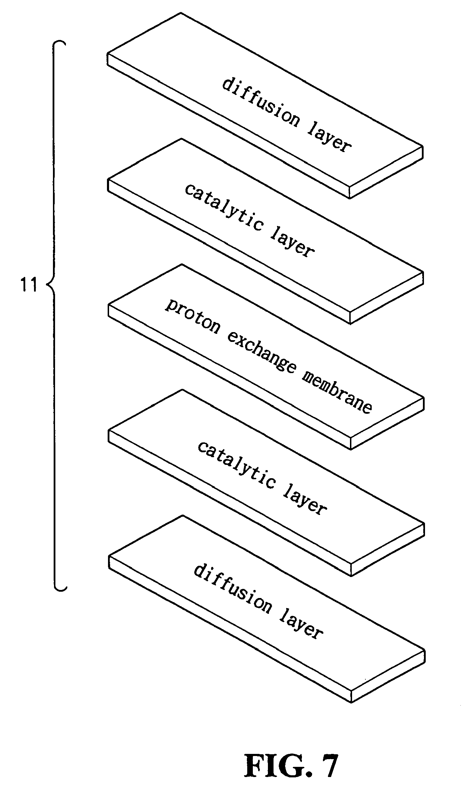

The core component of fuel cell 30 consists an anode current collection layer 13, a membrane-electrode assembly layer 11, and a cathode current collection layer 15. The membrane-electrode assembly layer 11 mainly consists five sub-layers, as shown in Fig. 7. Using the layer lamination integrated direct methanol fuel cell system of the present invention as an example, the middle layer is a proton exchange membrane that causes the proton-exchange effect, and on the top and bottom of the proton exchange membrane are two catalytic layers, where the electrochemical reactions of the anode and the cathode take place. Attached to the catalytic layers at the outer sides are diffusion layers. The anode reaction substance enters the catalytic layer via the diffusion layer. The produced substance from the chemical reaction, carbon oxide, from the chemical reaction, is discarded via the diffusion layer on the anode side. And the hydrogen proton can perform proton transition via the electrode layer. At this time, the electrons flows through and collects current from the anode current collection layer, then travels through the load and returns to the cathode, where it joins with the hydrogen proton and then reacts with the oxygen that had entered through the diffusion layer at the cathode end. The produced substance, water, further is disposed via the diffusion layer at the cathode end, thereby completes the electricity generation reaction.

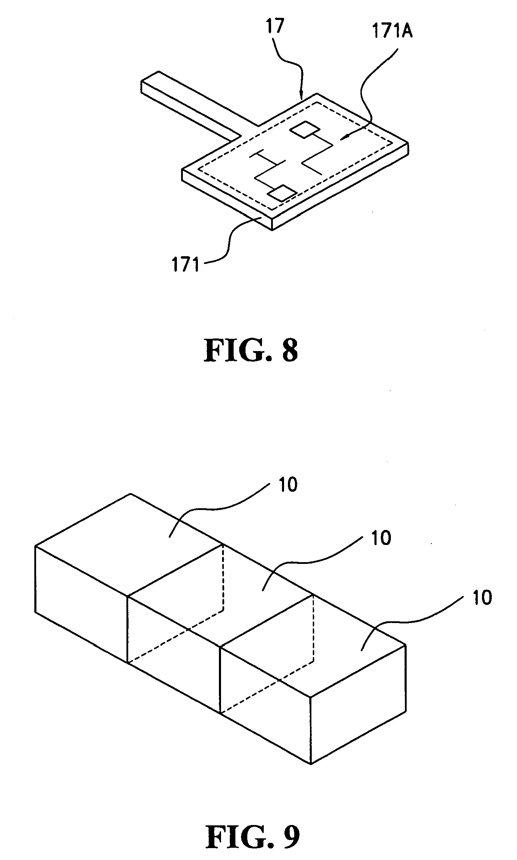

Referring to Fig. 8, the first power/signal transmission layers 17 that are separately placed at the membrane-electrode assembly layer 11, the anode current collection layer 13, and the cathode current collection layer 15, due to its structural characteristics, can use first circuit 171A on the first substrate 171 to link each membrane-electrode assembly layer in series or in parallel to increase the voltage or the current. Further, the first circuit 171 A can be changed to other circuits depending on the actual application. The anode current collection layer 13 and the cathode current collection layer 15 can be made of current-collection material such as metal net, graphite or other conductive material, for collecting electricity after the fuel's reaction.

When the anode fuel is a liquid fuel, such as methanol solution, the present invention further provides an anti-leaking porous material layer 23 at the top of the some area 191A of the second substrate 191 in the second power/signal transmission layer 19, as shown in Fig. 5. The layer 23 is mainly used to separate the methanol solution and the carbon oxide after the reaction. The porous material layer 23 can be made of porous and liquid-impermeable-and-gas-permeable material, so that carbon oxide may permeate via the layer 23 and the methanol solution is retained in the action area without reacting with the material.

The present invention further includes a water absorption layer 25 for absorbing water after reaction. The water absorption layer 25 can be made of water absorption material. The water absorption layer 25 is coupled to some area 191A of the second substrate in the second power/signal transmission layer 19 by the means of stacking lamination layers as shown in Fig. 5.

Referring to Fig. 9, the second circuit 191B of the second power/signal transmission layer 19 can be embodied with an electrically connected interface circuit component, such as connector, and each fuel cell system can be stacked together by connecting the interface circuit components. The way for stacking the fuel cell system may be horizontal stacking, vertical stacking or stacking along other directions.

The preceding first substrate 171 and the second substrate 191 can also be made of high molecular material, ceramics, complex material, metal, metal or metal oxide with nonconductive surface, acrylic, wood, stone, etc.

The fuel cell system 10 utilizes the means of stacking lamination layers to couple the preceding layers together. A plurality of independent core component of fuel cell 30 can be arranged on the same layer. The positive and negative output terminals of the electromechanical control layer 21, the first circuit 171A of the first power/signal transmission layer 17 or the first circuit 191B of the second power/signal transmission layer 19, may be serial or parallel connected to each core component of fuel cell 30 according to the voltage and current requirements. In addition, the electromechanical control layer 21 or the second circuit 191B of the second power/signal transmission layer 19 may be used to manage the quality of the electric power generated by core component of fuel cell 30. Further, the electromechanical control layer 21 can integrate all or some internal control related circuits of core component of fuel cell 30, and used them as an interface circuit or control circuit to the external circuits. Hence, both the method 40 and the fuel cell system 10 according to the present invention can easily implement the concept of the system on cell that previously had been difficult for fuel cell systems to achieve.

Because of the present invention utilizes the means of stacking lamination layers for manufacturing and coupling different layers, the present invention can easily satisfy the different size and shape requirements of different fuel cell systems.

## Claims

1. A manufacturing process for layer lamination integrated fuel cell system, comprising the following steps:
providing a membrane-electrode assembly layer, an anode current collection layer and a cathode current collection layer, whereas each of the said membrane-electrode assembly layer, said anode current collection layer and said cathode current collection layer can be integrated at the same layer with each individual first power/signal transmission layer;
providing one or more electromechanical control layer; and
coupling said membrane-electrode assembly layer, said anode current collection layer and said cathode current collection layer, said first power/signal transmission layer and said electromechanical control layer by means of stacking lamination layers.

2. The manufacturing process as defined in claim 1, further comprising the following steps:
providing one or more second power/signal transmission layer; and
separately coupling said second power/signal transmission layer on top of the said anode current collection layer and/or under the said cathode current collection layer by said means of stacking lamination layers.

3. The manufacturing process as defined in claim 1, wherein said first power/signal transmission layer comprises a first substrate and a first circuit on said first substrate.

4. The manufacturing process as defined in claim 2, wherein said second power/signal transmission layer comprises a second substrate and a second circuit on said second substrate.

5. The manufacturing process as defined in claim 4, wherein at least some area of a second substrate of at least one of said second power/signal transmission layers are used to provide a space to mix anode fuel.

6. The manufacturing process as defined in claim 5, further comprises: in the case the anode fuel is a liquid fuel, providing an anti-leaking porous material layer, and said anti-leaking porous material layer is coupled to the top of some area of a second substrate in said second power/signal by said means of stacking lamination layers.

7. The manufacturing process as defined in claim 4, wherein at least some area of a second substrate of one or more said second power/signal transmission layer are used to provide a space to mix cathode reaction substance.

8. The manufacturing process as defined in claim 7, further comprising the following steps:
providing a water absorption layer; and
coupling said water absorption layer below some area of said second substrate of said second power/signal transmission layer by said means of stacking lamination layers.

9. The manufacturing process as defined in claim1, further comprising a step of providing a fuel cartridge.

10. The manufacturing process as defined in claim 1, wherein the step of said means of stacking lamination layers is to couple said membrane-electrode assembly layer, said anode current collection layer, said cathode current collection layer, said first power/signal transmission layer and said electromechanical control layer by way of pressing.

11. The manufacturing process as defined in claim 1, wherein the step of said means of stacking lamination layers is to couple said membrane-electrode assembly layer, said anode current collection layer, said cathode current collection layer, said first power/signal transmission layer and said electromechanical control layer by way of accumulating.

12. The manufacturing process as defined in claim 1, wherein the step of said means of stacking lamination layers is to couple said membrane-electrode assembly layer, said anode current collection layer, said cathode current collection layer, said first power/signal transmission layer and said electromechanical control layer by way of adhesion.

13. The manufacturing process as defined in claim 1, wherein the step of said means of stacking lamination layers is to couple said membrane-electrode assembly layer, said anode current collection layer, said cathode current collection layer, said first power/signal transmission layer and said electromechanical control layer by way of screw thread fastening.

14. The manufacturing process as defined in claim 1, wherein the step of said means of stacking lamination layers is to couple said membrane-electrode assembly layer, said anode current collection layer, said cathode current collection layer, said first power/signal transmission layer and said electromechanical control layer by way of clamping.

15. The manufacturing process as defined in claim 2, wherein the step of said means of stacking lamination layers is to couple said membrane-electrode assembly layer, said anode current collection layer, said cathode current collection layer, said first power/signal transmission layer, said second power/signal transmission layer and said electromechanical control layer by way of pressing.

16. The manufacturing process as defined in claim 2, wherein the step of said means of stacking lamination layers is to couple said membrane-electrode assembly layer, said anode current collection layer, said cathode current collection layer, said first power/signal transmission layer, said second power/signal transmission layer and said electromechanical control layer by way of accumulating.

17. The manufacturing process as defined in claim 2, wherein the step of said means of stacking lamination layers is to couple said membrane-electrode assembly layer, said anode current collection layer, said cathode current collection layer, said first power/signal transmission layer, said second power/signal transmission layer and said electromechanical control layer by way of adhesion.

18. The manufacturing process as defined in claim 2, wherein the step of said means of stacking lamination layers is to couple said membrane-electrode assembly layer, said anode current collection layer, said cathode current collection layer, said first power/signal transmission layer, said second power/signal transmission layer and said electromechanical control layer by way of screw thread fastening.

19. The manufacturing process as defined in claim 2, wherein the step of said means of stacking lamination layers is to couple said membrane-electrode assembly layer, said anode current collection layer, said cathode current collection layer, said first power/signal transmission layer, said second power/signal transmission layer and said electromechanical control layer by way of clamping.

20. The manufacturing process as defined in claim 1, wherein said first power/signal transmission layer electrically connects with another first power/signal transmission layer.

21. The manufacturing process as defined in claim 2, wherein said second power/signal transmission layer electrically connects with another second power/signal transmission layer.

22. The manufacturing process as defined in claim 2, wherein said second power/signal transmission layer electrically connects with said first power/signal transmission layer.

23. The manufacturing process as defined in claim 1, wherein said electromechanical control layer electrically connects with said first power/signal transmission layer.

24. The manufacturing process as defined in claim 1, wherein said electromechanical control layer electrically connects with another electromechanical control layer.

25. The manufacturing process as defined in claim 1, wherein said electromechanical control layer electrically connects with said second power/signal transmission layer.

26. A layer lamination integrated fuel cell system, comprising a membrane-electrode assembly layer, an anode current collection layer a cathode current collection layer and an electromechanical control layer; **characterized by**:
one or more first/signal transmission layer, can be integrated with each said membrane-electrode assembly layer, said anode current collection layer and said cathode current collection layer at the same layer;
said membrane-electrode assembly layer, said anode current collection layer, said cathode current collection layer, said first power/signal transmission layer and said electromechanical control layer, coupled to each other by means of stacking lamination layers.

27. The layer lamination integrated fuel cell system as defined in claim 26, further comprises:
one or more second power/signal transmission layer, wherein said second power/signal transmission layer is placed on top of said anode current collection layer and/or below said cathode current collection layer by said means of stacking lamination layers.

28. The layer lamination integrated fuel cell system as defined in claim 26, wherein said first power/signal transmission layer comprises a first substrate and a first circuit placed on said first substrate.

29. The layer lamination integrated fuel cell system as defined in claim 27, wherein said second power/signal transmission layer comprises a second substrate and a second circuit on said second substrate.

30. The layer lamination integrated fuel cell system as defined in claim 29, wherein some area of said second substrate of one or more said second power/signal transmission layers are used as space for mixing anode fuel.

31. The layer lamination integrated fuel cell system as defined in claim 30, further comprises:
an anti-leaking porous material layer, in the case said anode fuel takes the form of a liquid fuel, wherein said anti-leaking porous material layer is placed on the top of some areas of said second substrate in said second power/signal transmission layers by way of said means of stacking lamination layers.

32. The layer lamination integrated fuel cell system as defined in claim 29, wherein some areas of said second substrate in one or more said second power/signal transmission layers are used as space for mixing cathode reaction substance.

33. The layer lamination integrated fuel cell system as defined in claim 32, further comprises a water absorption layer, wherein said water absorption layer is coupled to some area of said second substrate in said second power/signal transmission layer by said means of stacking lamination layers.

34. The layer lamination integrated fuel cell system as defined in claim 26, further comprises a fuel cartridge.

35. The layer lamination integrated fuel cell system as defined in claim 26, wherein said membrane-electrode assembly layer, said anode current collection layer, said cathode current collection layer, said first power/signal transmission layer and said electromechanical control layer are coupled by way of pressing.

36. The layer lamination integrated fuel cell system as defined in claim 26, wherein said membrane-electrode assembly layer, said anode current collection layer, said cathode current collection layer, said first power/signal transmission layer and said electromechanical control layer are coupled by way of accumulating.

37. The layer lamination integrated fuel cell system as defined in claim 26, wherein said membrane-electrode assembly layer, said anode current collection layer, said cathode current collection layer, said first power/signal transmission layer and said electromechanical control layer are coupled by way of adhesion.

38. The layer lamination integrated fuel cell system as defined in claim 26, wherein said membrane-electrode assembly layer, said anode current collection layer, said cathode current collection layer, said first power/signal transmission layer and said electromechanical control layer are coupled by way of screw thread fastening.

39. The layer lamination integrated fuel cell system as defined in claim 26, wherein said membrane-electrode assembly layer, said anode current collection layer, said cathode current collection layer, said first power/signal transmission layer and said electromechanical control layer are coupled by way of clamping.

40. The layer lamination integrated fuel cell system as defined in claim 27, wherein said membrane-electrode assembly layer, said anode current collection layer, said cathode current collection layer, said first power/signal transmission layer and said second power/signal transmission layer and said electromechanical control layer are coupled by way of pressing.

41. The layer lamination integrated fuel cell system as defined in claim 27, wherein said membrane-electrode assembly layer, said anode current collection layer, said cathode current collection layer, said first power/signal transmission layer and said second power/signal transmission layer and said electromechanical control layer are coupled by way of accumulating.

42. The layer lamination integrated fuel cell system as defined in claim 27, wherein said membrane-electrode assembly layer, said anode current collection layer, said cathode current collection layer, said first power/signal transmission layer and said second power/signal transmission layer and said electromechanical control layer are coupled by way of adhesion.

43. The layer lamination integrated fuel cell system as defined in claim 27, wherein said membrane-electrode assembly layer, said anode current collection layer, said cathode current collection layer, said first power/signal transmission layer and said second power/signal transmission layer and said electromechanical control layer are coupled by way of screw thread fastening.

44. The layer lamination integrated fuel cell system as defined in claim 27, wherein said membrane-electrode assembly layer, said anode current collection layer, said cathode current collection layer, said first power/signal transmission layer and said second power/signal transmission layer and said electromechanical control layer are coupled by way of clamping.

45. The layer lamination integrated fuel cell system as defined in claim 26, wherein said first power/signal transmission layer electrically connects with another first power/signal transmission layer.

46. The layer lamination integrated fuel cell system as defined in claim 27, wherein said second power/signal transmission layer electrically connects with another second power/signal transmission layer.

47. The layer lamination integrated fuel cell system as defined in claim 27, wherein said second power/signal transmission layer electrically connects with the first power/signal transmission layer.

48. The layer lamination integrated fuel cell system as defined in claim 26, wherein said electromechanical control layer electrically connects with the first power/signal transmission layer.

49. The layer lamination integrated fuel cell system as defined in claim 26, wherein said electromechanical control layer electrically connects with another electromechanical control layer.

50. The layer lamination integrated fuel cell system as defined in claim 27, wherein said electromechanical control layer electrically connects with said second power/signal transmission layer.

51. The layer lamination integrated fuel cell system as defined in claim 26, wherein said fuel cell system is stacked and integrated with another layer lamination integrated fuel cell system.

## Patentansprüche

1. Herstellungsverfahren für ein integriertes Laminatschicht- Brennstoffzellensystem, umfassend die folgenden Schritte: Schaffung einer Membran- Elektroden-Anordnungsschicht, einer Anoden- Stromsammelschicht und einer Katoden- Stromsammelschicht, wobei jede der genannten Schichten, also die Membran- Elektroden-Anordnungsschicht, die Anoden- Stromsammelschicht und die Katoden- Stromsammelschicht, in derselben Schicht mit jeder einzelnen ersten Strom- / Signal- Übertragungsschicht integriert werden kann; ferner umfassend die Schaffung einer oder mehrerer elektromechanischer Steuerschichten sowie Kupplung der Membran- Elektroden-Anordnungsschicht, der Anoden- Stromsammelschicht und der Katoden-Stromsammelschicht, der ersten Strom- / Signal- Übertragungsschicht und der elektromechanischen Steuerschicht mit Hilfe von gestapelten Laminatschichten.

2. Herstellungsverfahren nach Anspruch 1, ferner umfassend die folgenden Schritte: Schaffung einer oder mehrerer zweiter Strom- / Signal- Übertragungsschichten und separate Kupplung der zweiten Strom- / Signal- Übertragungsschicht oder Schichten auf der Oberseite der Anoden- Stromsammelschicht und / oder unter der Katoden- Stromsammelschicht durch gestapelte Laminatschichten.

3. Herstellungsverfahren nach Anspruch 1, **dadurch gekennzeichnet, daß** die erste Strom- / Signal- Übertragungsschicht ein erstes Substrat und unter diesem ersten Substrat eine erste Schaltung aufweist.

4. Herstellungsverfahren nach Anspruch 2, **dadurch gekennzeichnet, daß** die zweite Strom- / Signal- Übertragungsschicht ein zweites Substrat und unter diesem zweiten Substrat eine Schaltung aufweist.

5. Herstellungsverfahren nach Anspruch 4, **dadurch gekennzeichnet, daß** wenigstens etwas von der Fläche eines zweiten Substrats wenigstens einer der zweiten Strom- / Signal- Übertragungsschichten benutzt wird, um einen Raum für das Mischen von Anoden-Brennstoff zu schaffen.

6. Herstellungsverfahren nach Anspruch 5, **dadurch gekennzeichnet, daß** für den Fall, daß der Anoden-Brennstoff ein flüssiger Brennstoff ist, eine Antileckageschicht aus porösem Material geschaffen wird, und daß diese Antileckageschicht aus porösem Material mit der Oberseite einer gewissen Fläche eines zweiten Substrats in der zweiten Strom- / Signalübertragungsschicht durch Stapelung der Laminatschichten gekoppelt wird.

7. Herstellungsverfahren nach Anspruch 4, **dadurch gekennzeichnet, daß** wenigstens eine gewisse Fläche eines zweiten Substrats einer oder mehrerer zweiter Strom- / Signalübertragungsschichten zur Schaffung eines Raums benutzt wird, um die kathodische Reaktionssubstanz zu mischen.

8. Herstellungsverfahren nach Anspruch 7, ferner **gekennzeichnet durch** die folgenden Schritte: Schaffung einer Wasserabsorptionsschicht und Anschluß dieser Wasserabsorptionsschicht unterhalb der gewissen Fläche des zweiten Substrats der zweiten Strom- / Signalübertragungsschicht **durch** Stapeln der Laminatschichten.

9. Herstellungsverfahren nach Anspruch 1, ferner **gekennzeichnet durch** einen Schritt der Schaffung einer Brennstoffkartusche.

10. Herstellungsverfahren nach Anspruch 1, **dadurch gekennzeichnet, daß** der Schritt der Stapelung von Laminatschichten dazu dient, die Membranelektroden- Anordnungsschicht, die Anoden- Stromsammelschicht, die Kathoden-Stromsammelschicht, die erste Strom- / Signalübertragungsschicht und die elektromechanische Steuerschicht durch Zusammenpressen zu verbinden.

11. Herstellungsverfahren nach Anspruch 1, **dadurch gekennzeichnet, daß** der Schritt des Stapelns der Laminatschichten bedeutet, die Membran- Elektroden- Anordnungsschicht, die Anoden- Stromsammelschicht, die Kathoden-Stromsammelschicht, die erste Strom- / Signalübertragungsschicht und die elektromechanische Steuerschicht durch Anlagern zu verbinden.

12. Herstellungsverfahren nach Anspruch 1, **dadurch gekennzeichnet, daß** der Schritt des Stapelns von Laminatschichten bedeutet, daß die Membran- Elektroden- Anordnungsschicht, die Anoden- Stromsammelschicht, die Kathoden- Stromsammelschicht und die erste Strom- / Signalübertragungsschicht sowie die elektromechanische Steuerschicht durch Adhäsion gekoppelt werden.

13. Herstellungsverfahren nach Anspruch 1, **dadurch gekennzeichnet, daß** der Schritt des Stapelns von Laminatschichten bedeutet, die Membran- Elektroden- Anordnungsschicht, die Anoden- Stromsammelschicht, die Kathoden-Stromsammelschicht, die erste Strom- / Signalübertragungsschicht und die elektromechanische Steuerschicht durch Schraubfestigung zu verbinden.

14. Herstellungsverfahren nach Anspruch 1, **dadurch gekennzeichnet, daß** der Schritt des Stapelns von Laminatschichten bedeutet, die Membran- Elektroden- Anordnungsschicht, die Anoden- Stromsammelschicht, die Kathoden-Stromsammelschicht, die erste Strom- / Signalübertragungsschicht und die elektromechanische Steuerschicht durch Klemmen zu verbinden.

15. Herstellungsverfahren nach Anspruch 2, **dadurch gekennzeichnet, daß** der Schritt des Stapelns von Laminatschichten bedeutet, die Membran- Elektroden- Anordnungsschicht, die Anoden- Stromsammelschicht, die Kathoden-Stromsammelschicht, die erste Strom- / Signalübertragungsschicht, die zweite Strom- / Signalübertragungsschicht und die elektromechanische Steuerschicht durch Verpressen zu verbinden.

16. Herstellungsverfahren nach Anspruch 2, **dadurch gekennzeichnet, daß** der Schritt des Stapelns von Laminatschichten bedeutet, die Membran- Elektroden- Anordnungsschicht, die Anoden- Stromsammelschicht, die Kathoden-Stromsammelschicht, die erste Strom- / Signalübertragungsschicht, die zweite Strom- / Signalübertragungsschicht und die elektromechanische Steuerschicht durch Anlagern miteinander zu verbinden.

17. Herstellungsverfahren nach Anspruch 2, **dadurch gekennzeichnet, daß** der Schritt des Stapelns von Laminatschichten bedeutet, die Membran- Elektroden- Anordnungsschicht, die Anoden- Stromsammelschicht, die Kathoden-Stromsammelschicht, die erste Strom- / Signalübertragungsschicht, die zweite Strom- / Signalübertragungsschicht und die elektromechanische Steuerschicht durch Adhäsion zu verbinden.

18. Herstellungsverfahren nach Anspruch 2, **dadurch gekennzeichnet, daß** der Schritt des Stapelns von Laminatschichten bedeutet, daß die Membran- Elektroden- Anordnungsschicht, die Anoden- Stromsammelschicht, die Kathoden- Stromsammelschicht, die erste Strom- / Signalübertragungsschicht, die zweite Strom- / Signalübertragungsschicht und die elektromechanische Steuerschicht durch eine Schraubbefestigung verbunden werden.

19. Herstellungsverfahren nach Anspruch 2, **dadurch gekennzeichnet, daß** der Schritt des Stapelns von Laminatschichten bedeutet, daß die Membran- Elektroden- Anordnungsschicht, die Anoden- Stromsammelschicht, die Kathoden- Stromsammelschicht und die erste Strom- / Signalübertragungsschicht sowie die zweite Strom- / Signalübertragungsschicht und die elektromechanische Steuerschicht durch Zusammenklemmen verbunden werden.

20. Herstellungsverfahren nach Anspruch 1, **dadurch gekennzeichnet, daß** die erste Strom- / Signalübertragungsschicht elektrisch mit einer anderen ersten Strom- / Signalübertragungsschicht verbunden wird.

21. Herstellungsverfahren nach Anspruch 2, **dadurch gekennzeichnet, daß** die zweite Strom- / Signalübertragungsschicht elektrisch mit einer anderen zweiten Strom- / Signalübertragungsschicht verbunden wird.

22. Herstellungsverfahren nach Anspruch 2, **dadurch gekennzeichnet, daß** die zweite Strom- / Signalübertragungsschicht elektrisch mit der ersten Strom- / Signalübertragungsschicht verbunden wird.

23. Herstellungsverfahren nach Anspruch 1, **dadurch gekennzeichnet, daß** die elektromechanische Steuerschicht elektrisch mit der ersten Strom- / Signalübertragungsschicht verbunden wird.

24. Herstellungsverfahren nach Anspruch 1, **dadurch gekennzeichnet, daß** die elektromechanische Steuerschicht elektrisch mit einer anderen elektromechanischen Steuerschicht verbunden wird.

25. Herstellungsverfahren nach Anspruch 1, **dadurch gekennzeichnet, daß** die elektromechanische Steuerschicht elektrisch mit der zweiten Strom- / Signalübertragungsschicht verbunden wird.

26. Laminatschicht-integriertes Brennstoffzellensystem, umfassend eine Membran- Elektrodenanordnungsschicht, eine Anoden- Stromsammelschicht, eine Kathoden- Stromsammelschicht und eine elektromechanische Steuerschicht, **gekennzeichnet durch** eine oder mehrere erste Strom- / Signalübertragungsschichten, die mit jeder der folgenden Schichten, nämlich der Membran- Elektrodenanordnungsschicht, der Anoden- Stromsammelschicht und der Kathoden- Stromsammelschicht, integrierbar sind, wobei die Membran- Elektrodenanordnungsschicht, die Anoden- Stromsammelschicht, die Kathoden-Stromsammelschicht, die erste Strom- / Signalübertragungsschicht und die elektromechanische Steuerschicht **durch** Stapeln der Laminatschichten miteinander gekoppelt sind.

27. Laminatschicht-integriertes Brennstoffzellensystem nach Anspruch 26, ferner **gekennzeichnet durch** eine oder mehrere zweite Strom- / Signalübertragungsschichten, wobei die zweite Strom- / Signalübertragungsschicht oben auf der Anoden- Stromsammelschicht und / oder unterhalb der Kathoden-Stromsammelschicht **durch** Stapeln der Laminatschichtem angeordnet sind.

28. Laminatschicht-integriertes Brennstoffzellensystem nach Anspruch 26, **dadurch gekennzeichnet, daß** die erste Strom- / Signalübertragungsschicht ein erstes Substrat und eine erste Schaltung aufweist, die auf dem ersten Substrat angeordnet ist.

29. Laminatschicht-integriertes Brennstoffzellensystem nach Anspruch 27, **dadurch gekennzeichnet, daß** die zweite Strom- / Signalübertragungsschicht ein zweites Substrat und eine zweite Schaltung aufweist, die auf dem zweiten Substrat angeordnet ist.

30. Laminatschicht-integriertes Brennstoffzellensystem nach Anspruch 29, **dadurch gekennzeichnet, daß** eine gewisse Fläche des zweiten Substrats eines oder mehrerer zweiter Strom- / Signalübertragungsschichten als Raum zur Mischung von Anoden- Kraftstoff benutzt wird.

31. Laminatschicht-integriertes Brennstoffzellensystem nach Anspruch 30, **gekennzeichnet durch** eine poröse Antileckage-Materialschicht für den Fall, daß der Anoden- Kraftstoff die Form eines flüssigen Kraftstoffs hat, wobei die poröse Antileckage-Materialschicht oben auf der gewissen Fläche des zweiten Substrats in den Strom- / Signalübertragungsschichten angeordnet ist, und zwar **durch** Stapelung von Laminatschichten.

32. Laminatschicht-integriertes Brennstoffzellensystem nach Anspruch 29, **dadurch gekennzeichnet, daß** gewisse Flächen des zweiten Substrats in einer oder in mehreren genannten zweiten Strom- / Signalübertragungsschichten als Raum zur Mischung einer Kathoden- Reaktionssubstanz benutzt werden.

33. Laminatschicht-integriertes Brennstoffzellensystem nach Anspruch 32, **gekennzeichnet durch** eine Wasserabsorptionsschicht, die mit einer gewissen Fläche des zweiten Substrats in der zweiten Strom- / Signalübertragungsschicht **durch** Stapeln von Laminatschichten gekoppelt ist.

34. Laminatschicht-integriertes Brennstoffzellensystem nach Anspruch 26, **gekennzeichnet durch** eine Kraftstoffkartusche.

35. Laminatschicht-integriertes Brennstoffzellensystem nach Anspruch 26, **dadurch gekennzeichnet, daß** die Membran- Elektrodenanordnungsschicht, die Anoden- Stromsammelschicht, die Kathoden- Stromsammelschicht, die erste Strom- / Signalübertragungsschicht und die elektromechanische Steuerschicht durch Verpressen gekoppelt sind.

36. Laminatschicht-integriertes Brennstoffzellensystem nach Anspruch 26, **dadurch gekennzeichnet, daß** die Membran- Elektrodenanordnungsschicht, die Anoden- Stromsammelschicht, die Kathoden- Stromsammelschicht, die erste Strom- / Signalübertragungsschicht und die elektromechanische Steuerschicht durch Anlagern gekoppelt sind.

37. Laminatschicht-integriertes Brennstoffzellensystem nach Anspruch 26, **dadurch gekennzeichnet, daß** die Membran- Elektrodenanordnungsschicht, die Anoden- Stromsammelschicht, die Kathoden- Stromsammelschicht, die erste Strom- / Signalübertragungsschicht und die elektromechanische Steuerschicht durch Adhäsion gekoppelt sind.

38. Laminatschicht-integriertes Brennstoffzellensystem nach Anspruch 26, **dadurch gekennzeichnet, daß** die Membran- Elektrodenanordnungsschicht, die Anoden- Stromsammelschicht, die Kathoden- Stromsammelschicht, die erste Strom- / Signalübertragungsschicht und die elektromechanische Steuerschicht durch Schraubgewinde gekoppelt sind.

39. Laminatschicht-integriertes Brennstoffzellensystem nach Anspruch 26, **dadurch gekennzeichnet, daß** die Membran- Elektrodenanordnungsschicht, die Anoden- Stromsammelschicht, die Kathoden- Stromsammelschicht, die erste Strom- / Signalübertragungsschicht und die elektromechanische Steuerschicht durch Verklemmen gekoppelt sind.

40. Laminatschicht-integriertes Brennstoffzellensystem nach Anspruch 27, **dadurch gekennzeichnet, daß** die Membran- Elektrodenanordnungsschicht, die Anoden- Stromsammelschicht, die Kathoden- Stromsammelschicht, die erste Strom- / Signalübertragungsschicht und die zweite Strom- / Signalübertragungsschicht sowie die elektromechanische Steuerschicht durch Zusammenpressen gekoppelt sind.

41. Laminatschicht-integriertes Brennstoffzellensystem nach Anspruch 27, **dadurch gekennzeichnet, daß** die Membran- Elektrodenanordnungsschicht, die Anoden- Stromsammelschicht, die Kathoden- Stromsammelschicht, die erste Strom- / Signalübertragungsschicht und die zweite Strom- / Signalübertragungsschicht sowie die elektromechanische Steuerschicht durch Anlagern gekoppelt sind.

42. Laminatschicht-integriertes Brennstoffzellensystem nach Anspruch 27, **dadurch gekennzeichnet, daß** die Membran- Elektrodenanordnungsschicht, die Anoden- Stromsammelschicht, die Kathoden- Stromsammelschicht, die erste Strom- / Signalübertragungsschicht und die zweite Strom- / Signalübertragungsschicht sowie die elektromechanische Steuerschicht durch Adhäsion gekoppelt sind.

43. Laminatschicht-integriertes Brennstoffzellensystem nach Anspruch 27, **dadurch gekennzeichnet, daß** die Membran- Elektrodenanordnungsschicht, die Anoden- Stromsammelschicht, die Kathoden- Stromsammelschicht, die erste Strom- / Signalübertragungsschicht und die zweite Strom- / Signalübertragungsschicht sowie die elektromechanische Steuerschicht durch Schraubverbindung gekoppelt sind.

44. Laminatschicht-integriertes Brennstoffzellensystem nach Anspruch 27, **dadurch gekennzeichnet, daß** die Membran- Elektrodenanordnungsschicht, die Anoden- Stromsammelschicht, die Kathoden- Stromsammelschicht, die erste Strom- / Signalübertragungsschicht und die zweite Strom- / Signalübertragungsschicht sowie die elektromechanische Steuerschicht durch Zusammenklemmen gekoppelt sind.

45. Laminatschicht-integriertes Brennstoffzellensystem nach Anspruch 26, **dadurch gekennzeichnet, daß** die erste Strom- / Signalübertragungsschicht elektrisch mit einer anderen ersten Strom- / Signalübertragungsschicht verbunden ist.

46. Laminatschicht-integriertes Brennstoffzellensystem nach Anspruch 27, **dadurch gekennzeichnet, daß** die zweite Strom- / Signalübertragungsschicht elektrisch mit einer anderen zweiten Strom- / Signalübertragungsschicht verbunden ist.

47. Laminatschicht-integriertes Brennstoffzellensystem nach Anspruch 27, **dadurch gekennzeichnet, daß** die zweite Strom- / Signalübertragungsschicht elektrisch mit der ersten Strom- / Signalübertragungsschicht verbunden ist.

48. Laminatschicht-integriertes Brennstoffzellensystem nach Anspruch 26, **dadurch gekennzeichnet, daß** die elektromechanische Steuerschicht elektrisch mit der ersten Strom- / Signalübertragungsschicht verbunden ist.

49. Laminatschicht-integriertes Brennstoffzellensystem nach Anspruch 26, **dadurch gekennzeichnet, daß** die elektromechanische Steuerschicht elektrisch mit einer anderen elektromechanischen Steuerschicht verbunden ist.

50. Laminatschicht-integriertes Brennstoffzellensystem nach Anspruch 27, **dadurch gekennzeichnet, daß** die elektromechanische Steuerschicht elektrisch mit der zweiten Strom- / Signalübertragungsschicht verbunden ist.

51. Laminatschicht-integriertes Brennstoffzellensystem nach Anspruch 26, **dadurch gekennzeichnet, daß** das Brennstoffzellensystem gestapelt und mit einem anderen Laminatschicht-integrierten Brennstoffzellenstystem integriert ist.

## Revendications

1. Procédé de fabrication pour un système de pile à combustible intégré à couches laminées, comprenant les étapes suivantes :
fourniture d'une couche d'assemblage d'électrodes en forme de membrane, d'une couche de collecte de courant formant anode et d'une couche de collecte de courant formant cathode, dans lesquelles chacune parmi ladite couche d'assemblage d'électrodes en forme de membrane, ladite couche de collecte de courant formant anode et ladite couche de collecte de courant formant cathode peut être intégrée au niveau de la même couche avec chaque couche individuelle de transmission d'une première puissance/d'un premier signal ;
fourniture d'une ou plusieurs couches de contrôle électromécanique ; et
couplage de ladite couche d'assemblage d'électrodes en forme de membrane, de ladite couche de collecte de courant formant anode et de ladite couche de collecte de courant formant cathode, de ladite couche de transmission d'une première puissance/d'un premier signal et de ladite couche de contrôle électromécanique au moyen de couches de lamination d'empilage.

2. Procédé de fabrication selon la revendication 1, comprenant en outre les étapes suivantes :
fourniture d'une ou plusieurs couches de transmission d'une seconde puissance/d'un second signal ; et
couplage séparé de ladite couche de transmission d'une seconde puissance/d'un second signal sur le dessus de ladite couche de collecte de courant formant anode et/ou de ladite couche de collecte de courant formant cathode au moyen desdites couches de lamination d'empilage.

3. Procédé de fabrication selon la revendication 1, dans lequel ladite couche de transmission d'une première puissance/d'un premier signal comprend un premier substrat et un premier circuit sur ledit premier substrat.

4. Procédé de fabrication selon la revendication 2, dans lequel ladite couche de transmission d'une seconde puissance/d'un second signal comprend un second substrat et un second circuit sur ledit second substrat.

5. Procédé de fabrication selon la revendication 4, dans lequel au moins une certaine zone d'un second substrat de l'une au moins desdites couches de transmission d'une seconde puissance/d'un second signal est utilisée pour constituer un espace afin de mélanger le combustible d'anode.

6. Procédé de fabrication selon la revendication 5, comprenant en outre :
dans le cas où le combustible d'anode est un combustible liquide, fourniture d'une couche de matériau poreux antifuites, et couplage de ladite couche de matériau poreux antifuites sur le dessus d'une certaine zone d'un second substrat dans ladite couche de transmission d'une seconde puissance/d'un second signal au moyen desdites couches de lamination d'empilage.

7. Procédé de fabrication selon la revendication 4, dans lequel au moins une certaine zone d'un second substrat de l'une ou de plusieurs desdites couches de transmission d'une seconde puissance/d'un second signal est utilisée pour constituer un espace pour mélanger la substance de réaction de cathode.

8. Procédé de fabrication selon la revendication 7, comprenant en outre les étapes suivantes :
fourniture d'une couche d'absorption d'eau ; et
couplage de ladite couche d'absorption d'eau au-dessous d'une certaine zone dudit second substrat de ladite couche de transmission d'une seconde puissance/d'un second signal au moyen desdites couches de lamination d'empilage.

9. Procédé de fabrication selon la revendication 1, comprenant en outre une étape consistant à prévoir une cartouche à combustible.

10. Procédé de fabrication selon la revendication 1, dans lequel ladite étape de couplage au moyen desdites couches de lamination d'empilage consiste à coupler ladite couche d'assemblage d'électrodes en forme de membrane, ladite couche de collecte de courant formant anode, ladite couche de collecte de courant formant cathode, ladite couche de transmission d'une première puissance/d'un premier signal et ladite couche de contrôle électromécanique par pressage.

11. Procédé de fabrication selon la revendication 1, dans lequel ladite étape de couplage au moyen desdites couches de lamination d'empilage consiste à coupler ladite couche d'assemblage d'électrodes en forme de membrane, ladite couche de collecte de courant formant anode, ladite couche de collecte de courant formant cathode, ladite couche de transmission d'une première puissance/d'un premier signal et ladite couche de contrôle électromécanique par accumulation.

12. Procédé de fabrication selon la revendication 1, dans lequel ladite étape de couplage au moyen desdites couches de lamination d'empilage consiste à coupler ladite couche d'assemblage d'électrodes en forme de membrane, ladite couche de collecte de courant formant anode, ladite couche de collecte de courant formant cathode, ladite couche de transmission d'une première puissance/d'un premier signal et ladite couche de contrôle électromécanique par adhésion.

13. Procédé de fabrication selon la revendication 1, dans lequel ladite étape de couplage au moyen desdites couches de lamination d'empilage consiste à coupler ladite couche d'assemblage d'électrodes en forme de membrane, ladite couche de collecte de courant formant anode, ladite couche de collecte de courant formant cathode, ladite couche de transmission d'une première puissance/d'un premier signal et ladite couche de contrôle électromécanique par assemblage vissé.

14. Procédé de fabrication selon la revendication 1, dans lequel ladite étape de couplage au moyen desdites couches de lamination d'empilage consiste à coupler ladite couche d'assemblage d'électrodes en forme de membrane, ladite couche de collecte de courant formant anode, ladite couche de collecte de courant formant cathode, ladite couche de transmission d'une première puissance/d'un premier signal et ladite couche de contrôle électromécanique par pincement.

15. Procédé de fabrication selon la revendication 2, dans lequel ladite étape de couplage au moyen desdites couches de lamination d'empilage consiste à coupler ladite couche d'assemblage d'électrodes en forme de membrane, ladite couche de collecte de courant formant anode, ladite couche de collecte de courant formant cathode, ladite couche de transmission d'une première puissance/d'un premier signal et ladite couche de contrôle électromécanique par pressage.

16. Procédé de fabrication selon la revendication 2, dans lequel ladite étape de couplage au moyen desdites couches de lamination d'empilage consiste à coupler ladite couche d'assemblage d'électrodes en forme de membrane, ladite couche de collecte de courant formant anode, ladite couche de collecte de courant formant cathode, ladite couche de transmission d'une première puissance/d'un premier signal et ladite couche de contrôle électromécanique par accumulation

17. Procédé de fabrication selon la revendication 2, dans lequel ladite étape de couplage au moyen desdites couches de lamination d'empilage consiste à coupler ladite couche d'assemblage d'électrodes en forme de membrane, ladite couche de collecte de courant formant anode, ladite couche de collecte de courant formant cathode, ladite couche de transmission d'une première puissance/d'un premier signal et ladite couche de contrôle électromécanique par adhésion.

18. Procédé de fabrication selon la revendication 2, dans lequel ladite étape de couplage au moyen desdites couches de lamination d'empilage consiste à coupler ladite couche d'assemblage d'électrodes en forme de membrane, ladite couche de collecte de courant formant anode, ladite couche de collecte de courant formant cathode, ladite couche de transmission d'une première puissance/d'un premier signal et ladite couche de contrôle électromécanique par assemblage vissé.

19. Procédé de fabrication selon la revendication 2, dans lequel ladite étape de couplage au moyen desdites couches de lamination d'empilage consiste à coupler ladite couche d'assemblage d'électrodes en forme de membrane, ladite couche de collecte de courant formant anode, ladite couche de collecte de courant formant cathode, ladite couche de transmission d'une première puissance/d'un premier signal et ladite couche de contrôle électromécanique par pincement.

20. Procédé de fabrication selon la revendication 1, dans lequel ladite couche de transmission d'une première puissance/d'un premier signal assure une connexion électrique avec une autre couche de transmission d'une première puissance/d'un premier signal.

21. Procédé de fabrication selon la revendication 2, dans lequel ladite couche de transmission d'une seconde puissance/d'un second signal assure une connexion électrique avec une autre couche de transmission d'une seconde puissance/d'un second signal.

22. Procédé de fabrication selon la revendication 2, dans lequel ladite couche de transmission d'une seconde puissance/d'un second signal assure une connexion électrique avec ladite couche de transmission d'une première puissance/d'un premier signal.

23. Procédé de fabrication selon la revendication 1, dans lequel ladite couche de contrôle électromécanique assure une connexion électrique avec ladite couche de transmission d'une première puissance/d'un premier signal.

24. Procédé de fabrication selon la revendication 1, dans lequel ladite couche de contrôle électromécanique assure une connexion électrique avec une autre couche de contrôle électromécanique.

25. Procédé de fabrication selon la revendication 1, dans lequel ladite couche de contrôle électromécanique assure une connexion électrique avec ladite couche de transmission d'une seconde puissance/d'un second signal.

26. Système de pile à combustible intégré à couches laminées, comprenant une couche d'assemblage d'électrodes en forme de membrane, une couche de collecte de courant formant anode, une couche de collecte de courant formant cathode, et une couche de contrôle électromécanique ; **caractérisé par** :
une ou plusieurs couches de transmission d'une première puissance/d'un premier signal, qui peut/peuvent être intégrée(s) avec chacune de ladite couche d'assemblage d'électrodes en forme de membrane, de ladite couche de collecte de courant formant anode et de ladite couche de collecte de courant formant cathode au niveau de la même couche ;
ladite couche d'assemblage d'électrodes en forme de membrane, ladite couche de collecte de courant formant anode, ladite couche de collecte de courant formant cathode, ladite couche de transmission d'une première puissance/d'un premier signal et ladite couche de contrôle électromécanique étant couplées les unes aux autres au moyen de couches de lamination d'empilage.

27. Système de pile à combustible intégré à couches laminées selon la revendication 26, comprenant en outre :
une ou plusieurs couches de transmission d'une seconde puissance/d'un second signal, dans lesquelles ladite couche de transmission d'une seconde puissance/d'un second signal est placée sur le dessus de ladite couche de collecte de courant formant anode et/ou sur le dessous de ladite couche de collecte de courant formant cathode au moyen desdites couches de lamination d'empilage.

28. Système de pile à combustible intégré à couches laminées selon la revendication 26, dans lequel ladite couche de transmission d'une première puissance/d'un premier signal comprend un premier substrat et un premier circuit placé sur ledit premier substrat.

29. Système de pile à combustible intégré à couches laminées selon la revendication 27, dans lequel ladite couche de transmission d'une seconde puissance/d'un second signal comprend un second substrat et un second circuit sur ledit second substrat.

30. Système de pile à combustible intégré à couches laminées selon la revendication 29, dans lequel une certaine zone dudit second substrat de l'une ou plusieurs desdites couches de transmission d'une seconde puissance/d'un second signal est utilisée à titre d'espace pour mélanger du combustible d'anode.

31. Système de pile à combustible intégré à couches laminées selon la revendication 30, comprenant en outre :
une couche de matériau poreux antifuites, dans le cas où ledit combustible d'anode adopte la forme d'un combustible liquide, ladite couche de matériau poreux antifuites étant placée sur le dessus de certaines zones dudit second substrat dans lesdites couches de transmission d'une seconde puissance/d'un second signal au moyen desdites couches de lamination d'empilage.

32. Système de pile à combustible intégré à couches laminées selon la revendication 29, dans lequel certaines zones dudit second substrat dans une ou plusieurs desdites couches de transmission d'une seconde puissance/d'un second signal sont utilisés à titre d'espace pour mélanger une substance de réaction de cathode.

33. Système de pile à combustible intégré à couches laminées selon la revendication 32, comprenant en outre une couche d'absorption d'eau, ladite couche d'absorption d'eau étant couplée à certaines zones dudit second substrat dans ladite couche de transmission d'une seconde puissance/d'un second signal au moyen desdites couches de lamination d'empilage.

34. Système de pile à combustible intégré à couches laminées selon la revendication 26, comprenant en outre une cartouche à combustible.

35. Système de pile à combustible intégré à couches laminées selon la revendication 26, dans lequel ladite couche d'assemblage d'électrodes en forme de membrane, ladite couche de collecte de courant formant anode, ladite couche de collecte de courant formant cathode, ladite couche de transmission d'une première puissance/d'un premier signal et ladite couche de contrôle électromécanique sont couplées par pressage.

36. Système de pile à combustible intégré à couches laminées selon la revendication 26, dans lequel ladite couche d'assemblage d'électrodes en forme de membrane, ladite couche de collecte de courant formant anode, ladite couche de collecte de courant formant cathode, ladite couche de transmission d'une première puissance/d'un premier signal et ladite couche de contrôle électromécanique sont couplées par accumulation.

37. Système de pile à combustible intégré à couches laminées selon la revendication 26, dans lequel ladite couche d'assemblage d'électrodes en forme de membrane, ladite couche de collecte de courant formant anode, ladite couche de collecte de courant formant cathode, ladite couche de transmission d'une première puissance/d'un premier signal et ladite couche de contrôle électromécanique sont couplées par adhésion.

38. Système de pile à combustible intégré à couches laminées selon la revendication 26, dans lequel ladite couche d'assemblage d'électrodes en forme de membrane, ladite couche de collecte de courant formant anode, ladite couche de collecte de courant formant cathode, ladite couche de transmission d'une première puissance/d'un premier signal et ladite couche de contrôle électromécanique sont couplées par vissage.

39. Système de pile à combustible intégré à couches laminées selon la revendication 26, dans lequel ladite couche d'assemblage d'électrodes en forme de membrane, ladite couche de collecte de courant formant anode, ladite couche de collecte de courant formant cathode, ladite couche de transmission d'une première puissance/d'un premier signal et ladite couche de contrôle électromécanique sont couplées par pincement.

40. Système de pile à combustible intégré à couches laminées selon la revendication 27, dans lequel ladite couche d'assemblage d'électrodes en forme de membrane, ladite couche de collecte de courant formant anode, ladite couche de collecte de courant formant cathode, ladite couche de transmission d'une première puissance/d'un premier signal et ladite couche de contrôle électromécanique sont couplées par pressage.

41. Système de pile à combustible intégré à couches laminées selon la revendication 27, dans lequel ladite couche d'assemblage d'électrodes en forme de membrane, ladite couche de collecte de courant formant anode, ladite couche de collecte de courant formant cathode, ladite couche de transmission d'une première puissance/d'un premier signal et ladite couche de contrôle électromécanique sont couplées par accumulation.

42. Système de pile à combustible intégré à couches laminées selon la revendication 27, dans lequel ladite couche d'assemblage d'électrodes en forme de membrane, ladite couche de collecte de courant formant anode, ladite couche de collecte de courant formant cathode, ladite couche de transmission d'une première puissance/d'un premier signal et ladite couche de contrôle électromécanique sont couplées par adhésion.

43. Système par de pile à combustible intégré à couches laminées selon la revendication 27, dans lequel ladite couche d'assemblage d'électrodes en forme de membrane, ladite couche de collecte de courant formant anode, ladite couche de collecte de courant formant cathode, ladite couche de transmission d'une première puissance/d'un premier signal et ladite couche de contrôle électromécanique sont couplées vissage.

44. Système de pile à combustible intégré à couches laminées selon la revendication 27, dans lequel ladite couche d'assemblage d'électrodes en forme de membrane, ladite couche de collecte de courant formant anode, ladite couche de collecte de courant formant cathode, ladite couche de transmission d'une première puissance/d'un premier signal et ladite couche de contrôle électromécanique sont couplées par pincement.

45. Système de pile à combustible intégré à couches laminées selon la revendication 26, dans lequel ladite couche de transmission d'une première puissance/d'un premier signal assure une connexion électrique avec une autre couche de transmission d'une première puissance/d'un premier signal.

46. Système de pile à combustible intégré à couches laminées selon la revendication 27, dans lequel ladite couche de transmission d'une seconde puissance/d'un second signal assure une connexion électrique avec une autre couche de transmission d'une seconde puissance/d'un second signal.

47. Système de pile à combustible intégré à couches laminées selon la revendication 27, dans lequel ladite couche de transmission d'une seconde puissance/d'un second signal assure une connexion électrique avec ladite couche de transmission d'une première puissance/d'un premier signal.

48. Système de pile à combustible intégré à couches laminées selon la revendication 26, dans lequel ladite couche de contrôle électromécanique assure une connexion électrique avec ladite couche de transmission d'une première puissance/d'un premier signal.

49. Système de pile à combustible intégré à couches laminées selon la revendication 26, dans lequel ladite couche de contrôle électromécanique assure une connexion électrique avec une autre couche de contrôle électromécanique.

50. Système de pile à combustible intégré à couches laminées selon la revendication 27, dans lequel ladite couche de contrôle électromécanique assure une connexion électrique avec ladite couche de transmission d'une seconde puissance/d'un second signal.

51. Système de pile à combustible intégré à couches laminées selon la revendication 26, dans lequel ledit système de pile à combustible est empilé et intégré avec un autre système de pile à combustible intégré à couches laminées.
